# EUROPÄISCHE PATENTSCHRIFT

(11) **EP 2 726 382 B1**
(45) Veröffentlichungstag und Bekanntmachung des Hinweises auf die Patenterteilung: **30.09.2015**
(21) Anmeldenummer: 12729149.0
(22) Anmeldetag: 25.06.2012
(51) Int. Cl.: B65D 51/10, A47G 19/12, A47G 19/22

(54) **VERSCHLUSSEINRICHTUNG UND ZUGEHÖRIGER BEHÄLTER**
CLOSURE DEVICE AND CORRESPONDING CONTAINER
DISPOSITIF DE FERMETURE ET RÉCIPIENT ASSOCIÉ

(30) Priorität: 30.06.2011 DE 102011078465
(43) Veröffentlichungstag der Anmeldung: 07.05.2014
(73) Patentinhaber: WMF Württembergische Metallwarenfabrik AG, 73309 Geislingen/Steige (DE)
(72) Erfinder: KÖHLER, Claudia, 16547 Birkenwerder (DE); WILMS-HAVERKAMP, Irmy, 32051 Herford (DE); BOERNER, Cornelius, 73329 Kuchen (DE)
(74) Vertreter: BRP Renaud & Partner mbB Rechtsanwälte Patentanwälte Steuerberater
(86) Internationale Anmeldenummer: PCT/EP2012/062216
(87) Internationale Veröffentlichungsnummer: WO 2013/000858

(56) Entgegenhaltungen:
- WO-A1-2009/112552
- CN-U- 201 806 565
- FR-A- 1 329 700
- US-A1- 2009 108 003

## Beschreibung

Die vorliegende Erfindung betrifft eine Verschlusseinrichtung für einen Behälter, insbesondere für eine Wasserkaraffe. Die Erfindung betrifft außerdem einen Behälter, insbesondere eine Wasserkaraffe, mit einer derartigen Verschlusseinrichtung.

Um hohen ästhetischen Ansprüchen genügen zu können, wird Wasser, insbesondere im gewerblichen Bereich zunehmend aber auch im privaten Bereich, nicht in den im Handel erhältlichen Flaschen auf den Tisch gestellt, sondern üblicherweise vorab in eine Wasserkaraffe umgefüllt. Um unerwünschte Verunreinigungen des so angebotenen Wassers vermeiden zu können, verfügen die Wasserkaraffen üblicherweise über eine Verschlusseinrichtung, die vor dem Ausgießen geöffnet und nach dem Ausgießen wieder geschlossen werden muss. Dies ist generell etwas umständlich, wobei erschwerend hinzukommt, dass aufgrund dieser Umständlichkeit das Wiederverschließen der Wasserkaraffe oft unterlassen wird und dadurch trotz allem unterwünschte Verunreinigungen in das Trinkwasser gelangen können.

Aus der FR 1 329 700 A ist eine Verschlusseinrichtung eines Behälters bekannt, mit einem eine Verschlussöffnung bildenden runden Rahmen zum Einstecken in eine Ausgießöffnung des Behälters. Ebenfalls vorgesehen ist ein mit einem Pendel verbundener Deckel, der in der Verschlussöffnung des Rahmens derart pendelnd aufgehängt ist, dass der Deckel die Verschlussöffnung bei im Wesentlichen aufrechtem Behälter verschließt und bei schräg oder waagerecht gehaltenen Behälter aufgrund des Pendels verdreht und dadurch die Verschlussöffnung öffnet.

Aus der WO 2009/112552 A1 eine Verschlusseinrichtung zum Verschließen eines Behälters mit einem Pendel verbundenen Deckel bekannt, der in einer Verschlussöffnung eines Rahmens derart pendelnd aufgehängt ist, dass der Deckel die Verschlussöffnung beim im Wesentlichen aufrechten Behälter verschließt, wogegen der Deckel bei schräg oder waagerecht gehaltenem Behälter aufgrund des Pendels verdreht und dadurch die Verschlussöffnung geöffnet wird.

Die US 2009/108003 A1 und die CN 201806565 U offenbaren ebenfalls eine Verschlusseinrichtung.

Die Erfindung beschäftigt sich daher mit dem Problem, eine Verschlusseinrichtung für Behälter, insbesondere für Wasserkaraffen, anzugeben, die eine Verschlussöffnung selbsttätig und dadurch ohne zusätzliche Handgriffe öffnet bzw. schließt.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine autarke Verschlusseinrichtung anzugeben, die bei Bedarf in dazu passende Ausgießöffnungen von Behältern, beispielsweise von Wasserkaraffen, eingesteckt werden kann und die einen pendelnd aufgehängten Deckel aufweist, der bei normal aufrecht stehendem Behälter eine Verschlussöffnung der Verschlusseinrichtung verschließt und der bei schräg oder waagerecht gehaltenem Behälter aufgrund des Gewichts des Pendels verdreht wird und dadurch die Verschlussöffnung der Verschlusseinrichtung und damit auch die Ausgießöffnung des Behälters öffnet. Ein derartig pendelnd aufgehängter Deckel stellt eine erhebliche Vereinfachung im Gebrauch dar, da der Behälter, das heißt beispielsweise die Wasserkaraffe im normalen, auf dem Tisch stehenden aufrechten Zustand zuverlässig verschlossen ist, wogegen eine Ausgießöffnung des Behälters beim Einschenken automatisch geöffnet wird und dadurch ein zügiges Ausgießen erfolgen kann. Bei einem Zurückstellen des Behälters bewirkt der pendelnd aufgehängte Deckel, dass die Verschlussöffnung der Verschlusseinrichtung und damit die Ausgießöffnung des Behälters wieder zuverlässig verschlossen werden. Der Deckel, das Pendel und ein zugehöriger, die Verschlussöffnung der Verschlusseinrichtung bildender, insbesondere runder Rahmen zum Einstecken in die Ausgießöffnung des Behälters bilden dabei vorzugsweise eine zusammenhängende Baugruppe, so dass die daraus bestehende Verschlusseinrichtung zum Gebrauch einfach auf einen jeweiligen Behälter aufgesteckt und nach Entleeren des Behälters wieder von diesem entfernt und wiederverwendet bzw. gereinigt werden kann. Des Weiteren ist zumindest ein Kragarm vorgesehen, der von einer Innenwand des Rahmens absteht und an dessen freiem Ende der Deckel pendelnd aufgehängt ist. Von besonderem Vorteil bei der erfindungsgemäßen Verschlusseinrichtung ist darüber hinaus, dass das Öffnen und Schließen der Verschlussöffnung und damit auch der Ausgießöffnung des Behälters keinerlei zusätzlicher händischer Tätigkeiten bedarf, sondern lediglich aufgrund der Gewichtsverlagerung des Pendels beim Bewegen des Behälters erfolgt. Wird somit der Behälter gekippt, erfolgt aufgrund des am Pendel angeordneten Gewichts ein Verdrehen und damit ein Öffnen des Deckels, wogegen bei einem Zurückstellen des Behälters in eine vorzugsweise aufrechte Position das Pendel zurück schwingt und dabei den Deckel in seine Schließstellung zurückverstellt.

Bei einer vorteilhaften Weiterbildung der erfindungsgemäßen Lösung ist am freien Ende des Pendels ein Gewicht angeordnet. Je nach Ausführungsform des Deckels kann zu einem zuverlässigen Öffnen bzw. Schließen desselben ein individuelles Gewicht gehören, wobei ein größeres Gewicht zugleich ein zuverlässiges Öffnen und Schließen des Deckels bewirkt.

Bei einer vorteilhaften Weiterbildung der erfindungsgemäßen Lösung sind drei Kragarme vorgesehen, die von einer Innenwand des Rahmens abstehen und sich an ihren freien Enden berühren, wobei der Deckel im Bereich der sich berührenden freien Enden der Arme pendelnd aufgehängt ist. Der Deckel ist dabei derart pendelnd aufgehängt, dass er in alle Richtungen frei beweglich ist, so dass ein richtungsunabhängiges Ausgießen und damit auch ein richtungsunabhängiges Öffnen bzw. Schließen des Deckels allein über die Pendelkraft erfolgen kann. Dies bietet einen weiteren entscheidenden Vorteil im Vergleich zu bisherigen Wasserkaraffen, deren Verschlüsse oftmals eine Schnaupe verschlossen haben, die wiederum lediglich eine einzige Ausgießrichtung der Flüssigkeit aus der Wasserkaraffe, das heißt aus dem Behälter, erlaubt.

Zweckmäßig sind an einer Außenwand des Rahmens Dichtlippen angeordnet, die sich bei in die Ausgießöffnung des Behälters eingesteckter Verschlusseinrichtung an einer Innenwand des Behälters anlegen. Diese Dichtlippen bewirken dabei nicht nur ein Abdichten der Ausgießöffnung, sondern zusätzlich auch eine zuverlässige Fixierung der Verschlusseinrichtung in der Ausgießöffnung des Behälters, wobei die Dichtlippen zusätzlich geringe Fertigungstoleranzen bei den Behältern ausgleichen können. Sind die Dichtlippen vergleichsweise groß und elastisch ausgebildet, so ist ein dichtes und festes Einstecken der Verschlusseinrichtung selbst in nicht genau komplementär dazu ausgebildete Ausgießöffnungen an unterschiedlichen Behältern denkbar.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch
- Fig. 1: einen Behälter in der Art einer Wasserkaraffe mit einer erfindungsgemäßen Verschlusseinrichtung,
- Fig. 2a: die Verschlusseinrichtung bei verschlossenem Deckel,
- Fig. 2b: die Verschlusseinrichtung bei geneigtem Behälter und dadurch geöffnetem Deckel,
- Fig. 2c: die Verschlusseinrichtung bei weiter geneigtem Behälter und komplett geöffneter Verschlusseinrichtung.

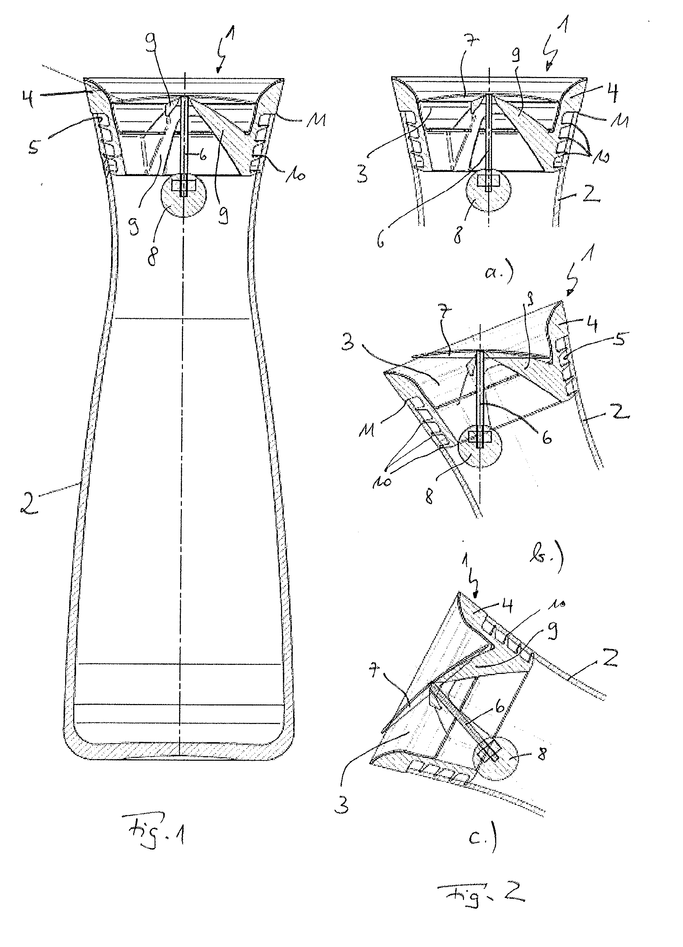

Entsprechend den Fig. 1 bis 3 weist eine erfindungsgemäße Verschlusseinrichtung 1 für einen Behälter 2, der beispielsweise als Wasserkaraffe ausgebildet ist, einen eine Verschlussöffnung 3 bildenden, insbesondere runden, Rahmen 4 zum Einstecken in eine Ausgießöffnung 5 des Behälters 2 auf. Darüber hinaus besitzt die Verschlusseinrichtung 1 einen mit einem Pendel 6 verbundenen Deckel 7, der in der Verschlussöffnung 3 des Rahmens 4 derart pendelnd aufgehängt ist, dass der Deckel 7 die Verschlussöffnung 3 bei im Wesentlichen aufrechten Behälter 2 verschließt, wogegen der Deckel 7 bei schräg oder waagerecht gehaltenem Behälter 2 aufgrund des Gewichts des Pendels 6 verdreht und dadurch die Verschlussöffnung 3 geöffnet wird. Die Verschlusseinrichtung 1 bietet somit den wesentlichen Vorteil, dass ein neigungsabhängiges Öffnen und Verschließen der Verschlussöffnung 3 und damit auch der Ausgießöffnung 5 des Behälters 2 erfolgt, ohne dass hierzu weitere Tätigkeiten erforderlich wären. Ein Neigen des Behälters 2 und damit auch ein Neigen der darin angeordneten Verschlusseinrichtung 1 bewirkt bereits aufgrund der Gewichtskraft des Pendels 6 ein Öffnen des Deckels 7 und damit ein Öffnen der Verschlussöffnung 3, wogegen diese wieder verschlossen wird, sofern der Behälter 2 wieder in seinem im Wesentlichen aufrechte Position zurückgeschwenkt wird.

Betrachtet man den Deckel 7 gemäß den Fig. 1 und 2, so kann man erkennen, dass dieser eine teilkugelförmige Gestalt aufweist, wobei selbstverständlich auch sämtliche andere Gestalten, insbesondere eine ebene Gestalt, denkbar ist. Das Pendel 6 steht im Wesentlichen orthogonal zum Deckel 7 nach unten von diesem ab und kann an einem freien Ende ein Gewicht 8 aufweisen. Ist das Pendel 6 selbst so schwer, dass es für eine Öffnungs- und Schließbewegung ausreicht, so kann auf das Gewicht 8 generell auch verzichtet werden. Betrachtet man weiter die Fig. 1, so kann man erkennen, dass insgesamt drei Kragarme 9 vorgesehen sind, die von einer Innenwand des Rahmens 4 abstehen und sich an ihren freien Ende berühren, wobei der Deckel 7 im Bereich der sich berührenden freien Enden der Kragarme 9 pendelnd aufgehängt ist. Selbstverständlich reicht hierfür auch lediglich ein einziger Kragarm 9 aus. Die pendelnde Aufhängung ist dabei derart gestaltet, dass das Pendel 6 richtungsunabhängig ausschlagen kann und dadurch ein richtungsunabhängiges Öffnen und Schließen des Deckels 7 je nach Neigungsrichtung der Verschlusseinrichtung 1 bzw. des Behälters 2 erfolgen kann. Dies ist insbesondere bei Wasserkaraffen ohne zusätzlichen Griff besonders vorteilhaft. In vollständig geöffnetem Zustand, wie dieser beispielsweise gemäß den Fig. 2b und 2c dargestellt ist, bildet zumindest einer der Kragarme 9 zugleich einen Anschlag für den Deckel 7, der eine weitere Öffnungsbewegung unterbindet, das heißt begrenzt.

An einer Außenwand des Rahmens 4 sind Dichtlippen 10 angeordnet, die sich bei in die Ausgießöffnung 5 des Behälters 2 eingesteckter Verschlusseinrichtung 1 an eine Innenwand des Behälters 2 anlegen und dadurch einerseits die Verschlusseinrichtung 1 gegenüber dem Behälter 2 abdichten und zusätzlich die Verschlusseinrichtung 1 in der Ausgießöffnung 5 des Behälters 2 fixieren. Dabei kann der Rahmen 4 zusätzlich einen oberhalb der Dichtlippen 10 angeordneten und nach radial außen orientierten Kragen 11 aufweisen, der als Einschubanschlag dient und dadurch die Einschubbewegung der Verschlusseinrichtung 1 in die Ausgießöffnung 5 des Behälters 2 begrenzt.

Generell kann der Rahmen 4, der wenigstens eine Kragarm 9, der Deckel 7 und/oder das Pendel 6 aus Metall oder aus Kunststoff oder einer Mischung davon ausgebildet sein.

Gemäß den Fig. 2a bis 2c sind die unterschiedlichen Öffnungs- und Schließzustände der Verschlusseinrichtung 1 gezeigt, wobei gemäß der Fig. 2a der Behälter 2 aufrecht steht und sich dadurch der Deckel 7 in seiner Schließstellung befindet. Gemäß der Fig. 2b ist der Behälter 2 und damit auch die Verschlusseinrichtung 1 in geneigtem Zustand gezeichnet, in welchem das Gewicht 8 ein Verschwenken des Pendels 6 und damit auch ein Verschwenken und Öffnen des Deckels 7 bewirkt. Der Deckel 7 liegt dabei an einer Oberseite des Kragarms 9 an, so dass eine weitere Öffnungsbewegung nicht mehr möglich ist. Gemäß der Fig. 2c sind der Behälter 2 und damit auch die Verschlusseinrichtung 1 noch weiter geneigt, wobei der Deckel 7 die gleiche Öffnungsstellung aufweist wie in der Fig. 2b, da der den Anschlag bildende Kragarm 9 die weitere Öffnungsbewegung des Deckels 7 unterbindet. In gleicher Weise könnte auch ein Anstoßen des Gewichts 8 des Pendels 6 an einer Innenwand des Rahmens 4 eine weitere Öffnungsbewegung unterbinden. Bei einem Zurückneigen des Behälters 2 und damit auch der Verschlusseinrichtung 1 wird der Deckel aufgrund der Schwerkraft durch das Pendel 6 und das daran befestigte Gewicht 8 wieder in seine Schließstellung (vgl. Fig. 2a) zurückverstellt.

Mit der erfindungsgemäßen Verschlusseinrichtung 1, die generell wieder verwendbar ist und in unterschiedlichste Ausgießöffnungen 5 an Behältern 2 eingesteckt werden kann, kann ein einerseits zuverlässiges Verschließen der Ausgießöffnung 5 des Behälters 2 im Nichtgebrauchszustand erreicht werden und andererseits ein automatisches Öffnen der Ausgießöffnung beim Neigen des Behälters, das heißt beim normalen Einschenken. Durch die konstruktiv einfache Ausbildung der Verschlusseinrichtung 1 ist zudem ein Neigen und gleichzeitig auch ein Öffnen des Deckels 7 in jede beliebige Richtung möglich, wodurch sich die erfindungsgemäße Verschlusseinrichtung 1 wiederum deutlich vom Stand der Technik abhebt. Zudem ist die erfindungsgemäße Verschlusseinrichtung 1 konstruktiv einfach aufgebaut und kostengünstig zu fertigen, was insbesondere einen großen Vorteil in Bezug auf die Vermarktung bringt.

## Patentansprüche

1. Verschlusseinrichtung (1) eines Behälters (2), insbesondere für eine Wasserkaraffe, mit
- einem eine Verschlussöffnung (3) bildenden, insbesondere runden Rahmen (4) zum Einstecken in eine Ausgießöffnung (5) des Behälters (2),
- einem mit einem Pendel (6) verbundenen Deckel (7), der in der Verschlussöffnung (3) des Rahmens (4) derart pendelnd aufgehängt ist, dass
- der Deckel (7) die Verschlussöffnung (3) bei im Wesentlichen aufrechtem Behälter (2) verschließt,
- der Deckel (7) bei schräg oder waagerecht gehaltenem Behälter (2) aufgrund des Pendels (6) verdreht und dadurch die Verschlussöffnung (3) geöffnet wird,
- zumindest einem Kragarm (9), der von einer Innenwand des Rahmens (4) absteht und an dessen freiem Ende der Deckel (7) pendelnd aufgehängt ist.

2. Verschlusseinrichtung nach Anspruch 1,
**dadurch gekennzeichnet,**
**dass** der Deckel (7) eine teilkugelförmige Gestalt aufweist.

3. Verschlusseinrichtung nach Anspruch 1 oder 2,
**dadurch gekennzeichnet,**
**dass** das Pendel (6) im Wesentlich orthogonal vom Deckel (7) absteht.

4. Verschlusseinrichtung nach einem der Ansprüche 1 bis 3,
**dadurch gekennzeichnet,**
**dass** am freien Ende des Pendels (6) ein Gewicht (8) angeordnet ist.

5. Verschlusseinrichtung nach einem der Ansprüche 1 bis 4,
**dadurch gekennzeichnet,**
**dass** drei Kragarme (9) vorgesehen sind, die von einer Innenwand des Rahmens (4) abstehen und sich an ihren freien Enden berühren, wobei der Deckel (7) im Bereich der sich berührenden freien Enden der Kragarme (9) pendelnd aufgehängt ist.

6. Verschlusseinrichtung nach Anspruch 4 oder 5,
**dadurch gekennzeichnet,**
**dass** zumindest ein Kragarm (9) zugleich als Anschlag für den Deckel (7) ausgebildet ist, der eine Öffnungsbewegung begrenzt.

7. Verschlusseinrichtung nach einem der Ansprüche 1 bis 6,
**dadurch gekennzeichnet,**
**dass** an einer Außenwand des Rahmens (4) Dichtlippen (10) angeordnet sind, die sich bei in die Ausgießöffnung (5) des Behälters (2) eingesteckter Verschlusseinrichtung (1) an eine Innenwand des Behälters (2) anlegen.

8. Verschlusseinrichtung nach einem der Ansprüche 4 bis 7,
**dadurch gekennzeichnet,**
**dass** der Rahmen (4), der wenigstens eine Kragarm (9), der Deckel (7) und/oder das Pendel (6) aus Metall oder aus Kunststoff ausgebildet sind.

9. Behälter (2), insbesondere eine Wasserkaraffe, mit einer Verschlusseinrichtung (1) nach einem der Ansprüche 1 bis 8.

## Claims

1. Closure device (1) of a container (2), in particular for a water decanter, comprising:
- a frame (4), which is in particular circular and forms a closure opening (3) for inserting into a pouring opening (5) of the container (2),
- a lid (7), connected to a pendulum (6), which lid is suspended in the closure opening (3) of the frame (4) so as to swing in such a way that,
- the lid (7) closes the closure opening (3) when the container (2) is substantially upright,
- the lid (7) rotates owing to the pendulum (6) when the container (2) is held obliquely or horizontally and the closure opening (3) is opened thereby,
- at least one cantilever (9) which projects from an inner wall of the frame (4) and on the free end of which the lid (7) is suspended so as to swing.

2. Closure device according to claim 1, **characterised in that** the lid (7) is in the shape of a part of a sphere.

3. Closure device according to either claim 1 or claim 2, **characterised in that** the pendulum (6) projects from the lid (7) substantially orthogonally.

4. Closure device according to any of claims 1 to 3, **characterised in that** a weight (8) is arranged at the free end of the pendulum (6).

5. Closure device according to any of claims 1 to 4, **characterised in that** three cantilevers (9) are provided which project from an inner wall of the frame (4) and are in contact at the free ends thereof, the lid (7) being suspended so as to swing in the region of the free ends of the cantilevers (9) which are in contact.

6. Closure device according to either claim 4 or claim 5, **characterised in that** at least one cantilever (9) is also formed as a stop for the lid (7), which stop limits an opening movement.

7. Closure device according to any of claims 1 to 6, **characterised in that** sealing lips (10) are arranged on an outer wall of the frame (4), which sealing lips rest against an inner wall of the container (2) when the closure device (1) is inserted into the pouring opening (5) of the container (2).

8. Closure device according to any of claims 4 to 7, **characterised in that** the frame (4), the at least one cantilever (9), the lid (7) and/or the pendulum (6) are made of metal or plastics material.

9. Container (2), in particular a water decanter, comprising a closure device (1) according to any of claims 1 to 8.

## Revendications

1. Dispositif de fermeture (1) d'un récipient (2), en particulier pour une carafe d'eau, avec
- un cadre (4), en particulier rond, formant un orifice de fermeture (3), destiné à être inséré dans une ouverture de déversage (5) du récipient (2),
- un couvercle (7) relié à un pendule (6) et accroché de manière oscillante dans l'orifice de fermeture (3) du cadre (4), de telle sorte que
- le couvercle (7) obture l'orifice de fermeture (3) lorsque le récipient (2) est tenu en position essentiellement verticale,
- le couvercle (7) pivote du fait du pendule (6) lorsque le récipient (2) est tenu en position inclinée ou horizontale et ouvre de ce fait l'orifice de fermeture (3),
- tout au moins un bras en porte-à-faux (9) faisant saillie depuis une paroi intérieure du cadre (4) et à l'extrémité libre duquel le couvercle (7) est accroché de manière oscillante.

2. Dispositif de fermeture selon la revendication 1,
**caractérisé en ce que**
le couvercle (7) présente une configuration en forme de sphère partielle.

3. Dispositif de fermeture selon la revendication 1 ou 2,
**caractérisé en ce que**
le pendule (6) fait saillie de manière essentiellement orthogonale depuis le couvercle (7).

4. Dispositif de fermeture selon l'une des revendications 1 à 3,
**caractérisé en ce qu'**
un poids (8) est disposé à l'extrémité libre du pendule (6).

5. Dispositif de fermeture selon l'une des revendications 1 à 4,
**caractérisé en ce que**
trois bras en porte-à-faux (9) sont prévus qui font saillie depuis une paroi intérieure du cadre (4) et se touchent au niveau de leurs extrémités libres, dans lequel le couvercle (7) est accroché de manière oscillante au niveau des extrémités libres se touchant des bras en porte-à-faux (9).

6. Dispositif de fermeture selon la revendication 4 ou 5,
**caractérisé en ce qu'**
est conçu tout au moins un bras en porte-à-faux (9) servant en même temps de butée pour le couvercle (7), qui restreint un mouvement d'ouverture.

7. Dispositif de fermeture selon l'une des revendications 1 à 6,
**caractérisé en ce que**
des lèvres d'étanchéité (10) sont disposées au niveau d'une paroi extérieure du cadre (4) et viennent s'appliquer au niveau d'une paroi intérieure du récipient (2) lorsque le dispositif de fermeture (1) est inséré dans l'ouverture de déversage (5) du récipient (2).

8. Dispositif de fermeture selon l'une des revendications 4 à 7,
**caractérisé en ce que**
le cadre (4), l'au moins un bras en porte-à-faux (9), le couvercle (7) et/ou le pendule (6) sont conçus en métal ou en plastique.

9. Récipient (2), en particulier une carafe d'eau, avec un dispositif de fermeture (1) selon l'une des revendications 1 à 8.
